# EUROPÄISCHE PATENTSCHRIFT

(11) **EP 1 402 251 B1**
(45) Veröffentlichungstag und Bekanntmachung des Hinweises auf die Patenterteilung: **27.08.2008**
(21) Anmeldenummer: 02754331.3
(22) Anmeldetag: 04.07.2002
(51) Int. Cl.: G01N 29/22

(54) **VORRICHTUNG ZUM ULTRASCHALL-PRÜFEN DER SCHWEISSNAHT LÄNGSGESCHWEISSTER ROHRE AUF LÄNGS- UND QUERFEHLER**
DEVICE FOR ULTRASONIC WELD SEAM TESTING OF LONGITUDINALLY WELDED PIPES FOR LONGITUDINAL AND TRANSVERSAL defects
DISPOSITIF DE CONTROLE PAR ULTRASONS DU CORDON DE SOUDURE DE TUYAUX SOUDES PAR UN CORDON LONGITUDINAL POUR DETECTER DES défauts LONGITUDINALES ET TRANSVERSALES

(30) Priorität: 05.07.2001 DE 10134696
(43) Veröffentlichungstag der Anmeldung: 31.03.2004
(73) Patentinhaber: EUROPIPE GmbH, 45473 Mülheim a. d. Ruhr (DE)
(72) Erfinder: GRAFF, Alfred, 45239 Essen (DE); VERHOEVEN, Jürgen, 47441 Moers (DE); KERSTING, Thomas, 47447 Moers (DE); OESTERLEIN, Ludwig, 45481 Mülheim (DE)
(74) Vertreter: Meissner, Peter E.
(86) Internationale Anmeldenummer: PCT/DE2002/002497
(87) Internationale Veröffentlichungsnummer: WO 2003/005017

(56) Entgegenhaltungen:
- DE-A- 2 607 011
- DE-A- 2 655 364
- DE-A- 4 113 519
- DE-C- 19 826 759
- GB-A- 2 012 047
- LEBSACK S.; HECKHAUSER H.: 'Immersion probe arrays for rapid pipeline weld inspection' MATERIALS EVALUATION Bd. 53, Nr. 8, August 1995, AMERICAN SOC FOR NONDESTRUCTIVE TESTING, COLUMBUS, OH, USA, Seiten 886 - 891, XP009090272

## Beschreibung

Die Erfindung betrifft eine Vorrichtung zum Ultraschall-Prüfen der Schweißnaht längsnahtgeschweißter Rohre,- insbesondere Großrohre, auf Längs- und Querfehler gemäß dem Oberbegriff des Patentanspruches 1.

Eine Vorrichtung zum Ultraschall-Prüfen von Längs-Schweißnähten auf Längs- und Querfehler ist von Scott Lebsack und Helmut Heckhauser in der Zeitschrift "Materials Evaluation" (August 1995, Seiten 886 - 891) veröffentlicht mit dem Titel "Immersion Probe Arrays for Rapid Pipeline Weld Inspection". Diese weist ein Haltesystem auf, in dem zwei Prüfkopfsysteme befestigt sind. Jedes Prüfkopfsystem weist vier Prüfköpfe für die Längsfehlerprüfung und einen Prüfkopf für die Querfehlerprüfung auf. Die zwei Prüfkopfsysteme für die Längsfehlerprüfung sind rechts und links neben der Schweißnaht positioniert. Der Prüfkopf für die Querfehlerprüfung ist zur Schweißnaht in einem Winkel von etwa 45° schräg gestellt. Die Schwinger in den Prüfköpfen sind rund mit einem Durchmesser von 5 mm. Das in Tauchtechnik arbeitende Prüfkopfsystem ist mit Anschlüssen für das Koppelmittel versehen.

In der DE 198 26 759 C1 ist eine Vorrichtung zum Ultraschall-Prüfen von Längs-Schweißnähten auf Querfehler offenbart. Diese bekannte Vorrichtung weist mindestens einen in einem Halteelement angeordneten, in Linie zur Schweißnaht liegenden und mit je einem Schwinger versehenen Prüfkopf auf. Der Prüfkopf ist mit mindestens einem Koppelmittel-Anschluss versehen, dessen Kanal im Bereich des Schwingers mündet. Im Prüfkopf ist ein breiter Rechteckschwinger angeordnet, dessen Breite quer zur Schweißnaht liegt. Der das Koppelmittel führende Kanal ist im Austrittsbereich düsenartig ausgebildet mit einer Öffnung quer zur Schweißnaht, die der Breite des Rechteckschwingers entspricht. Der Austrittsbereich der Düse ist der Schweißnahtüberhöhung angepasst. Das jeweilige Düsenelement ist mit dem Gehäuse mittels langer Schrauben verbunden, die sich durch das den Prüfkopf umfassende Gehäuse erstrecken.

Vorzugsweise werden für die Querfehlerprüfung zwei Prüfköpfe in Tandem-Anordnung verwendet. Die Anpassung der Tandem-Anordnung an verschiedene Dicken des zu prüfenden Rohres erfolgt in der Weise, dass auf einem Prüfwagen ein Prüfkopf fest und der zweite Prüfkopf axial dazu verschiebbar angeordnet ist.

Nachteilig bei den bekannten Vorrichtungen ist, dass die Anpassung an stark unterschiedliche Rohrabmessungen schwierig und aufwendig ist und auch die reproduzierbare Einstellung des Einschallwinkels Probleme bereitet. Instandhaltungsarbeiten im Sinne des Auswechselns schadhafter Teile sind ebenfalls zeitaufwendig.

Aufgabe der Erfindung ist es daher, eine Vorrichtung zum Ultraschall-Prüfen der Schweißnaht längsnahtgeschweißter Rohre, insbesondere Großrohre, auf Längs- und Querfehler anzugeben, die eine einfachere Anpassung an unterschiedliche Rohrabmessungen ermöglicht und mit der eine reproduzierbare Einstellung des Einschallwinkels sichergestellt werden kann Die Instandhaltungsarbeiten sollen durch die neue Vorrichtung erleichtert werden.

Diese Aufgabe wird ausgehend vom Oberbegriff in Verbindung mit den kennzeichnenden Merkmalen des Anspruches 1 gelöst. Vorteilhafte Weiterbildungen sind jeweils Gegenstand von Unteransprüchen.

Nach der Lehre der Erfindung ist der Prüfkopf für die Längsfehlerprüfung in verschiedenen fest vorgegebenen Winkellagen aber in einem veränderbaren Abstand zum Düsenelement im Aufnehmer anordenbar. Weiterhin sind der bzw. die Prüfköpfe für die Querfehlerprüfung mitsamt den jeweiligen Aufnehmern gemeinsam in einem veränderbaren Abstand zur Rohroberfläche in einem die Aufnehmer aufnehmenden Rahmen angeordnet.

Die vorgeschlagene Anordnung hat den Vorteil, dass in flexibler Anpassung an unterschiedliche Prüfaufgaben verschiedene Winkellagen vorgebbar sind, aber die einmal gewählte Winkellage reproduzierbar fest einstellbar ist. Dies wird beispielsweise in der Weise realisiert, dass man einen auswechselbaren Einsatz bildet, bestehend aus zwei Seitenplatten und einem Verbindungsstück und in den Seitenplatten innenseitig unter einer bestimmten Winkellage je eine Ausnehmung anbringt, in die der Aufnehmer für den Prüfkopf einsteckbar und fixierbar ist. Damit ist sicher gestellt, dass der Prüfkopf unter der in der Ausnehmung vorgegebenen Winkellage einschallt. Die Fixierung des Aufnehmers zwischen den beiden Seitenplatten erfolgt vorzugsweise mittels durch die Seitenwand steckbare und in den Aufnehmer drehbare Schrauben.

Durch den vorgeschlagenen veränderbaren Abstand des Prüfkopfes zum Düsenelement lässt sich der zwischen Düsenelement und dem stirnseitigen Ende des Prüfkopfes sich einstellende Koppelmittelspalt verändern. Diese Anpassung kann dazu genutzt werden, um zum einen die für eine ordnungsgemäße Prüfung erforderliche Ankoppelung zu kontrollieren und zum anderen den Abiluss des Koppelmittels beeinflussen zu können.

Beim Prüfwagen für die Querfehlerprüfung wird vorgeschlagen, den jeweiligen Aufnehmer für jeden Prüfkopf in einem Tragelement anzuordnen, wobei dieses gegenüber dem ihn umgebenden Rahmen in der Höhe veränderbar ist. Somit kann in sehr einfacher Weise für alle im Querfehler-Prüfwagen angeordneten Prüfköpfe gemeinsam der gewünschte Abstand zur Rohroberfläche eingestellt werden. Die schwierige Justierung jedes einzelnen Prüfkopfes entfällt damit.

Vorzugsweise sind im Querfehler-Prüfwagen drei Prüfköpfe angeordnet. Ein Prüfkopf fest und ein zweiter axial verschiebbar dazu für die Querfehlerprüfung sowie ein dritter fest angeordneter Prüfkopf für die Doppelungsprüfung.

Für die an sich bekannte axiale Verschiebbarkeit des zweiten Prüfkopfes wird die Anordnung zweier Spindeln im Tragelement vorgeschlagen, die stirnseitig mit je einer Zahnriemenscheibe versehen sind. Umschlingt man beide Zahnriemenscheiben mit einem endlosen Zahnriemen, dann kann man durch Drehen einer Spindel mittels einer Rändelmutter beide Spindeln drehen und somit den axialen Abstand des zweiten Prüfkopfes zum ersten Prüfkopf verändern.

Die Düsenelemente sind wegen ihres möglichen Kontaktes der Unterseite mit der Rohroberfläche einem Verschleiß unterworfen. Um sie in einfacher Weise auswechseln zu können, wird vorgeschlagen, diese von unten her mit Schrauben am Aufnehmer zu befestigen. Durch einfaches Abheben des Prüfwagens hat man Zugang zu den Befestigungsschrauben und kann somit in einfacher Weise das verschlissene Düsenelement auswechseln.

Zur Vermeidung der Entstehung von Störsingnalen sind die Düsenelemente aus verschleißfestem Kunststoff, vorzugsweise aus Teflon, hergestellt.

Weitere Merkmale, Vorteile und Einzelheiten der Erfindung ergeben sich aus der nachfolgenden Beschreibung von einem in einer Zeichnung dargestellten Ausführungsbeispiel:

Es zeigen:

| | |
|---|---|
| **Figur 1 bis 3** | in einer Vorder-, Seiten- und Draufsicht einen erfindungsgemäß ausgebildeten Prüfwagen für die Längsfehlerprüfung |
| **Figur 4a, b** | in einer Vorder- und Draufsicht einen Aufnehmer für den Längsfehlerprüfkopf |
| **Figur 5a, b** | in einer Seiten- und Draufsicht eine Seitenplatte |
| **Figur 6a, b** | in einer Seiten- und Draufsicht ein Düsenelement für die Längsfehlerprüfung |
| **Figur 7 bis 9** | in einer Vorder-, Seiten- und Draufsicht einen erfindungsgemäß ausgebildeten Prüfwagen für die Querfehlerprüfung |
| **Figur 10a, b** | in einer Seiten- und Vorderansicht einen Seitenteil des Rahmens |
| **Figur 11a, b** | in einer Vorder und Draufsicht ein Seitenteil des Tragelementes |
| **Figur 12a, b, c** | in zwei Ansichten und einem Schnitt ein Führungsteil |
| **Figur 13 a, b** | in einer Drauf- und Vorderansicht eine Tandemanordnung zweier Aufnehmer für die Querfehlerprüfung |
| **Figur 14a** | eine Vorderansicht eines Aufnehmers für die Doppelungsprüfung |
| **Figur 13b** | einen Schnitt von Figur 14a |

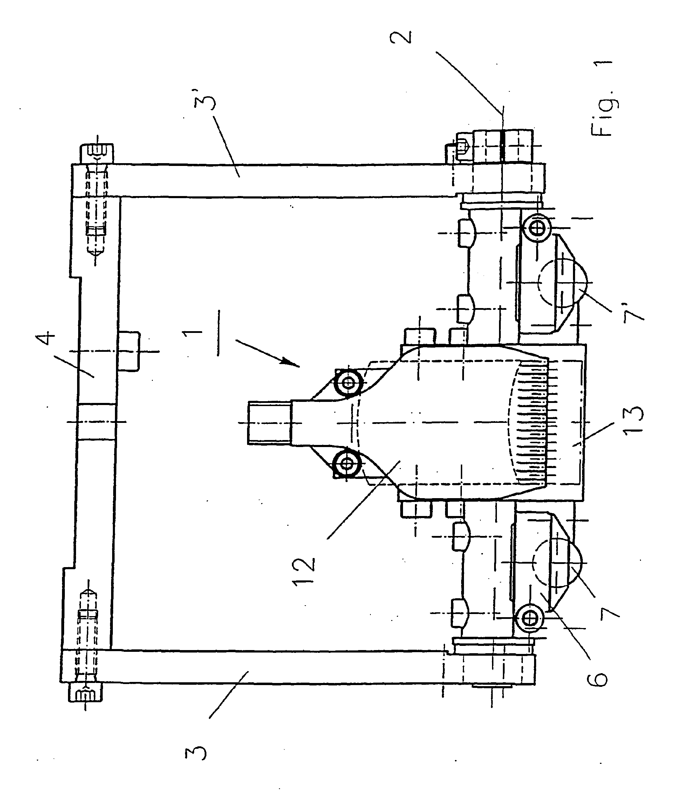

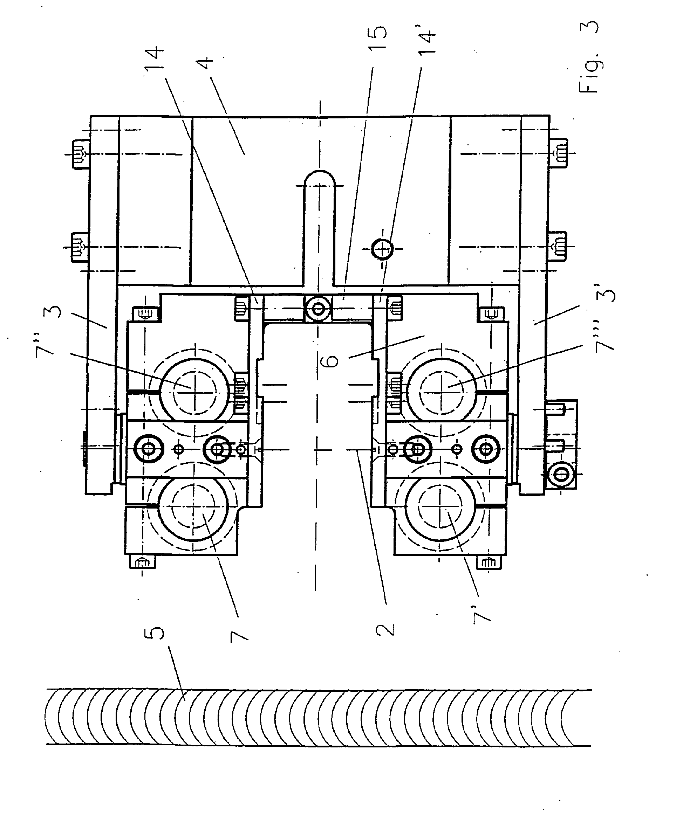

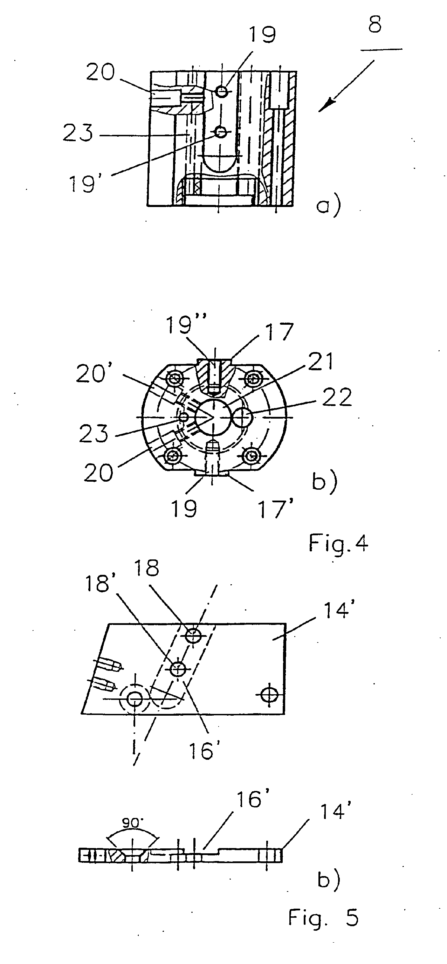

In den **Figuren 1** bis **3** sind in einer Vorder-, Seiten- und Draufsicht ein erfindungsgemäß ausgebildeter Prüfwagen 1 für die Längsfehlerprüfung dargestellt, wobei in der Draufsicht (**Figur 3**) der Aufnehmer 8 (**Figur 4**) weggelassen wurde. Der Prüfwagen 1 ist um eine Achse 2 schwenkbar aufgehängt mittels zweier Seitenbügel 3, 3' und einem die beiden Seitenbügel 3, 3' verbindenden Oberbügel 4.

Die Lage der zu prüfenden Längsschweißnaht 5 in Bezug auf den Prüfwagen zeigt **Figur 3****.** Der Vollständigkeit halber sei erwähnt, dass auf der linken Seite der Längsschweißnaht 5 ein gleichartig ausgebildeter Prüfwagen für die Längsfehlerprüfung angeordnet ist.

Der Prüfwagen 1 ist mittels vier in der Grundplatte 6 des Prüfwagens 1 einklemmbarer Kugelrollen 7 - 7'" auf der Rohroberfläche verschiebbar angeordnet. Der Prüfwagen 1 weist, wie nachfolgend noch näher erläutert wird, einen Aufnehmer 8 (**Figur 4**) für den Prüfkopf 9 auf, der unter einer bestimmten vorgegebenen Winkellage auf dem Prüfwagen 1 befestigt werden kann. In dem Aufnehmer 8 ist auch eine Tülle 10 für die Zufuhr des Koppelmittels angeordnet.

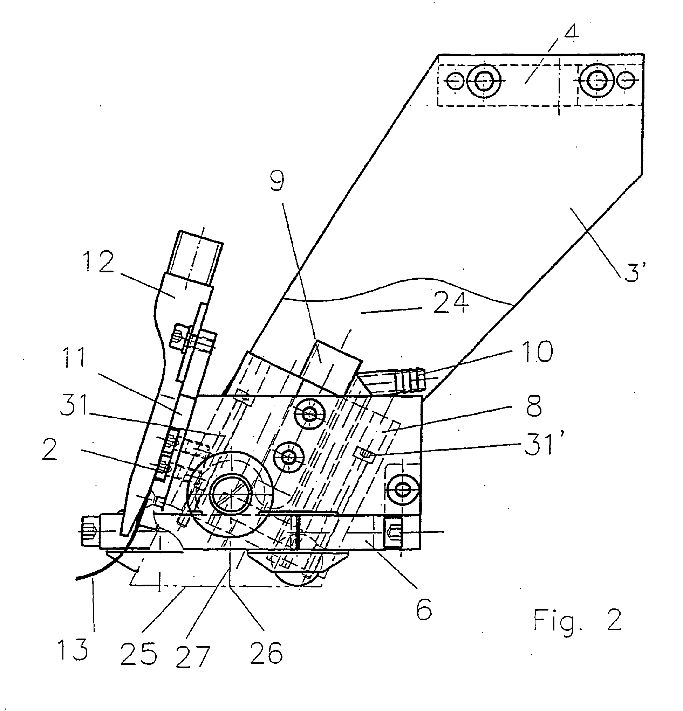

Um zu verhindern, dass zuviel Koppelmittel in Richtung Längsschweißnaht 5 fließen kann, was zu Signalstörungen führt, ist an einer Platte 11 eine Flachstrahldüse 12 und ein Abweisblech 13 befestigt **(****Figur 1**,**2****).**

In **Figur 3** ist in Verbindung mit **Figur 4 und 5** dargestellt, wie der Aufnehmer 8 im Prüfwagen 1 befestigt wird. Dazu sind in einem rechteckigen Ausschnitt der Grundplatte 6 zwei einander gegenüber liegende Seitenplatten 14, 14' angeordnet, die durch ein Verbindungsstück 15 miteinander verbunden sind und somit eine auswechselbare Einheit bilden.

Gemäß der Darstellung in **Figur 5** ist die Seitenplatte 14' **dadurch gekennzeichnet, dass** auf der Innenseite eine schräg verlaufende Ausnehmung 16' angeordnet ist, die unter einem bestimmten fest vorgegebenen Winkel α verläuft. Dieser Winkel α wird je nach gewünschtem Einschallwinkel errechnet und dementsprechend als schräge Ausnehmung 16' in die Seitenplatte 14' eingefräst. Die verschieden ausgefrästen Seitenplatten 14, 14' ergeben zusammen mit dem unveränderbaren Verbindungsstück 15 jeweils einen Einbausatz für einen bestimmten Einschallwinkel.

Komplementär zur Ausnehmung 16, 16' weist der Aufnehmer 8 zwei einander gegenüber liegende nasenartige Vorsprünge 17, 17', so dass der Aufnehmer 8 in einfacher Weise zwischen den Seitenplatten 14, 14' einsteckbar ist. Die Befestigung des Aufnehmers 8 zwischen den beiden Seitenplatten 14, 14' erfolgt mittels durch die Seitenplatten 14, 14' hindurchsteckbare und in den Aufnehmer 8 eindrehbare, hier nicht dargestellte, Schrauben. Dazu weist die jeweilige Seitenplatte 14' zwei Durchgangsbohrungen 18, 18' und der Aufnehmer 8 im Bereich der nasenartigen Vorsprünge 17, 17' je zwei Gewindebohrungen 19-19"' auf.

Die vorgeschlagene Anordnung hat den Vorteil, dass sich bei Festlegung eines Winkels α für die Ausnehmung 16, 16' ein definierter Einschallwinkel für den Prüfkopf 9 ergibt, so dass reproduzierbar unter Verwendung der Einbausätze immer mit dem gleichen vorgegebenen Einschallwinkel geprüft wird. Die früher übliche Einjustierung des Prüfkopfes 8 entfällt damit.

Zur Befestigung des Prüfkopfes 9 im Aufnehmer 8 weist dieser eine in der Mitte angeordnete Bohrung 21 auf. Die Befestigung selbst erfolgt mittels zweier seitlich eindrehbarer, hier nicht dargestellter, Klemmschrauben. Dazu weist der Aufnehmer 8 zwei seitlich angeordnete Gewindebohrungen 20, 20' auf. Der Prüfkopf 9 kann somit in der Bohrung 21 geklemmt werden, dabei ist er aber in der Höhe verstellbar angeordnet, ohne den Einschallwinkel zu verändern. Neben der Bohrung 21 für den Prüfkopf 9 ist im Aufnehmer 8 eine zweite kleinere Bohrung 22 für Anordnung der Tülle 10 vorgesehen. Gegenüber liegend ist eine Entlüftungsbohrung 23 vorgesehen.

Anhand der Darstellung in **Figur 2** werden noch einmal im Zusammenhang die Gegebenheiten des Einschallwinkels erläutert. Bedingt durch die in den Seitenplatten 14, 14' unter einem vorgegebenen Winkel α eingefrästen Ausnehmungen 16, 16' wird der Aufnehmer 8 und damit der Prüfkopf 9 unter diesem besagten Winkel α im Prüfwagen 1 fixiert. Verlängert man die Achse 24 des Prüfkopfes 9 so ergibt sich mit der Horizontalen 25 ein Schnittpunkt 26. Die Horizontale 25 ist festgelegt durch die Aufsetzpunkte der Kugelrollen 7 - 7"'. Durch diesen besagten Schnittpunkt 26 verläuft auch die durch die Schwenkachse 2 gehende Vertikale 27. Egal was für ein Winkel α für die Ausnehmung 16, 16' gewählt wird, es wird immer sicher gestellt, dass sich die zuvor erläuterten geometrischen Verhältnisse bezüglich des Schnittpunktes 26 nicht verändern. Nur auf diese Weise ist ein reproduzierbarer Einschallwinkel einhaltbar.

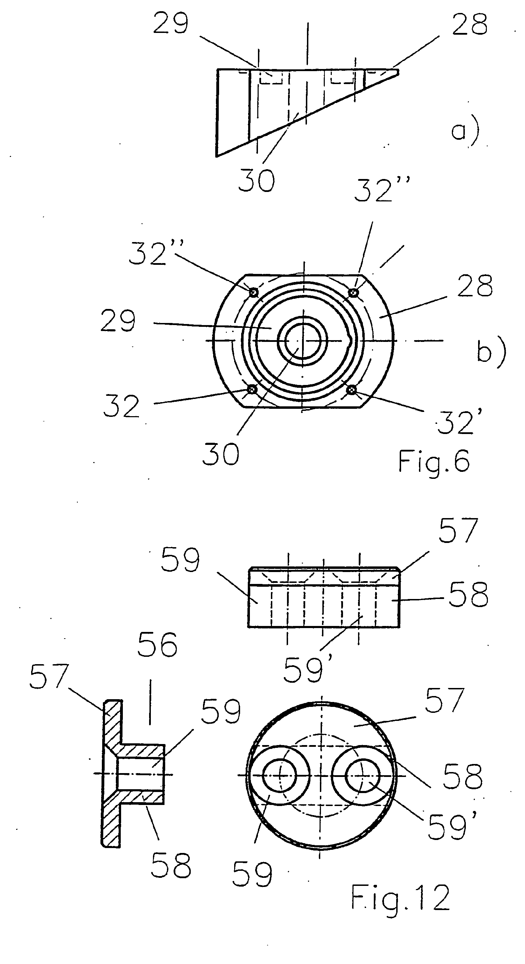

**Figur 6** zeigt das zum Aufnehmer 8 dazu gehörende Düsenelement 28 für die Längsfehler-prüfung. Die Winkeligkeit dieses Düsenelementes 28 ist der Winkeligkeit der Anordnung des Prüfkopfes 9 angepasst. Es ist aber nicht erforderlich in gleicher feiner Abstufung für jeden Einschallwinkel ein speziell angepasstes Düsenelement 28 herzustellen. Vielmehr ist es möglich mit einem Düsenelement 28 einige nicht zu weit auseinander liegende Einschallwinkel abzudecken. Im Düsenelement 28 ist ein Ringkanal 29 für den Überlauf des Koppelmittels vorgesehen. In der Mitte befindet sich das Abflussloch 30 für das Koppelmittel. Befestigt wird das Düsenelement 28 mittels vier Schrauben 31 - 31'" (**Figur 2**), die durch Bohrungen im Aufnehmer 8 gesteckt in die Gewindebohrung 32 - 32'" des Düsenelementes 28 eingedreht werden. Bei der Beschreibung des Düsenelementes für die Querfehlerprüfung wird noch erläutert werden, wie man im Sinne eines einfacheren Auswechselns die Befestigungsart verändern kann.

Vorzugsweise ist das Düsenelement 28 aus Teflon im Sinne einer Unterdrückung von Störsignalen hergestellt.

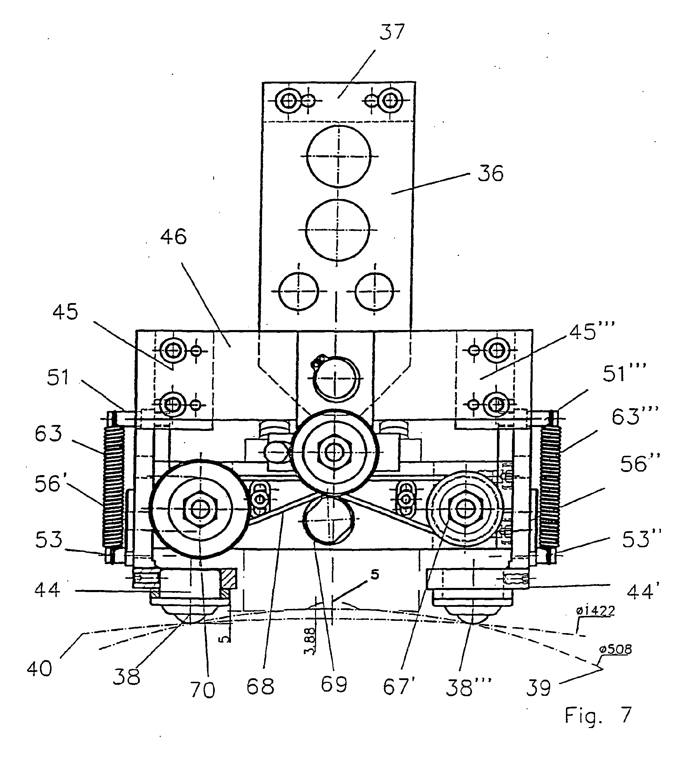

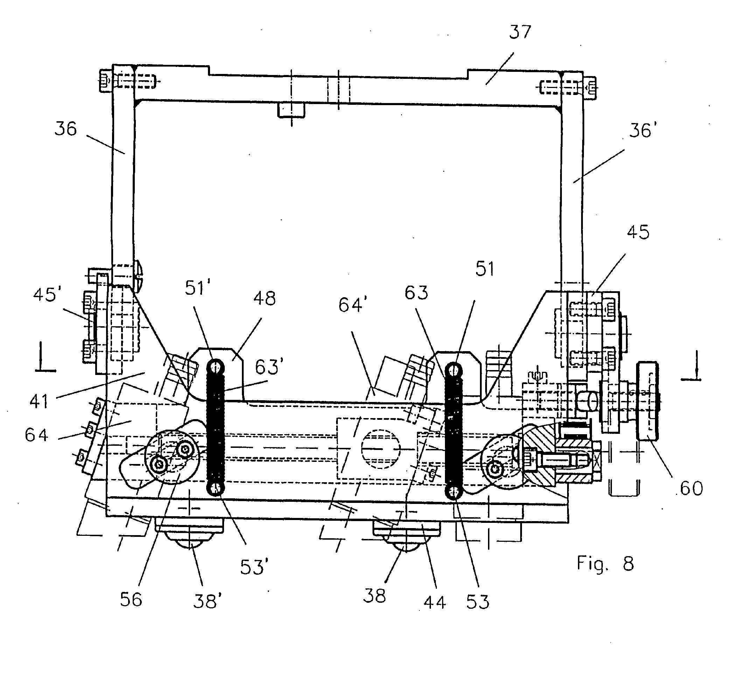

In den **Figuren 7 - 9** ist in einer Vorder-, Seiten- und Draufsicht ein erfindungsgemäß ausgebildeter Prüfwagen 35 für die Querfehlerprüfung dargestellt. Dieser ist ebenfalls schwenkbar mittels zweier Seitenbügel 36, 36' und eines Oberbügels 37 aufgehängt. Vergleichbar wie der Prüfwagen 1 für die Längsfehlerprüfung ist auch der Prüfwagen 35 für die Querfehlerprüfung mittels festklemmbarer Kugelrollen 38 - 38''' auf der Rohroberfläche verschiebbar angeordnet.

In **Figur 7** ist die Problematik der Anpassung an unterschiedliche Durchmesser von Rohren 39, 40 dargestellt. Man kann an diesem Beispiel gut erkennen, dass beim Wechsel von einem zu prüfenden Rohr mit einem Außendurchmesser von 508 mm zu einem zu prüfenden Rohr mit einem Außendurchmesser von 1422 mm im Bereich der Längsschweißnaht 5 eine Höhendifferenz von 3,88 mm zu überbrücken ist. Nachfolgend wird erläutert, wie diese Anpassung erfindungsgemäß erfolgt.

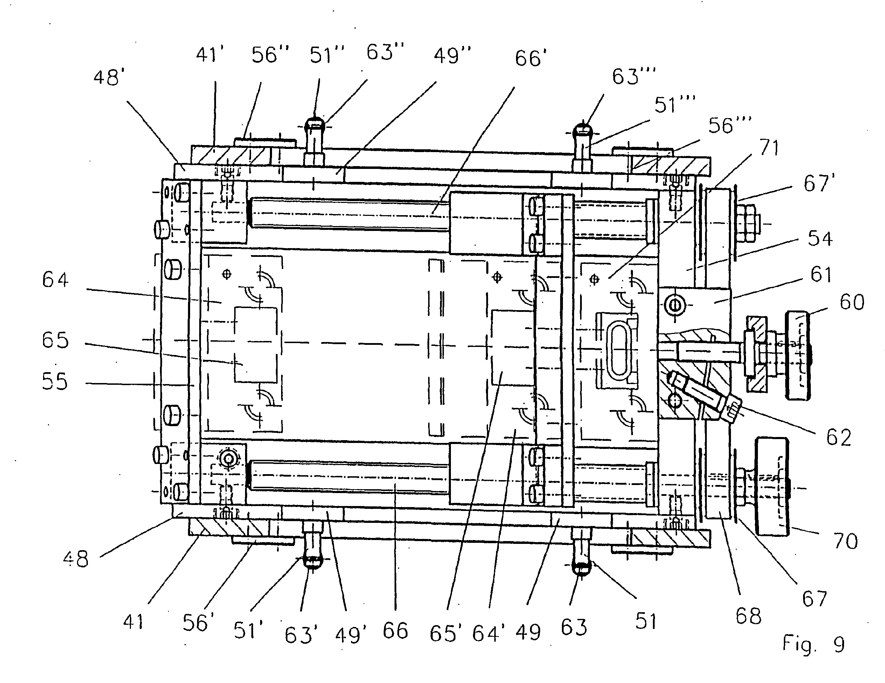

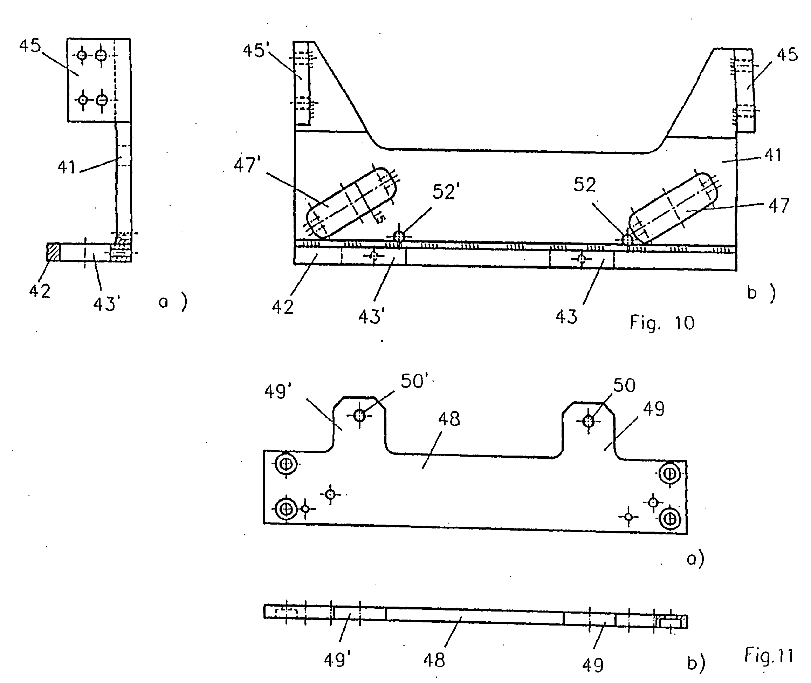

Der Prüfwagen 35 weist dazu zwei Seitenteile 41, 41' **(****Figur 9**, **10****)** auf. Das jeweilige Seitenteil 41 ist gekennzeichnet durch ein horizontal liegendes Stegblech 42 mit einer Bohrung 43 - 43"' zur Aufnahme des Klemmelementes 44 - 44"' für die Kugelrollen 38 - 38"'. Weiterhin sind an jedem Seitenteil zwei vertikal liegende Stegbleche 45 - 45''' angeschweißt, die zusammen mit einem Querträger 46, 46' den äußeren Rahmen des Prüfwagens 35 bilden. Im jeweiligen Seitenteil 41, 41' sind in den beiden Randbereichen je eine schräg stehende Ausnehmung 47, 47' angeordnet.

Figur 11 zeigt ein Seitenteil 48, 48' des inneren Tragelementes. Dieses ist auf der Oberseite mit zwei schlaufenartigen Stegen 49 - 49"' versehen. Diese Stege 49 - 49"' weisen Bohrungen 50 - 50'" auf, in die ein Stehbolzen 51 - 51'" einsteckbar ist. In gleicher Weise sind auch die vorher erläuterten Seitenteile 41, 41' des äußeren Rahmens mit Bohrungen 52 - 52"' versehen, in die ebenfalls Stehbolzen 53 - 53"' einsteckbar sind. Die zwei Seitenteile 48, 48' des inneren Tragelementes sind durch zwei Träger 54, 55 miteinander verbunden. Das innere Tragelement ist im äußeren Rahmen höhenverstellbar angeordnet, um die in **Figur 7** erläuterte unterschiedliche Krümmung der zu prüfenden Rohre ausgleichen zu können. Die erfindungsgemäße Höhenverschiebung des Tragelementes gegenüber dem äußeren Rahmen erfolgt mittels eines Führungsteiles 56 - 56'" (**Figur 12**). Dieses weist eine kragenartige Scheibe 57 und einen daran angeordneten rechteckigen Führungsklotz 58 auf. Das Führungsteil 56 ist durchsetzt von zwei Bohrungen 59, 59'. Das jeweilige Führungsteil 56 - 56'" wird durch die in **Figur 10** dargestellte Ausnehmung 47-47"' gesteckt und mit den Seitenteilen 48, 48' des Tragelementes mittels hier nicht dargestellter Schrauben verbunden.

Durch Drehen einer Rändelmutter 60 wird eine Stellmutter 61 axial bewegt (**Figur 9**). Mittels des Trägers 54 wird diese axiale Bewegung der Stellmutter 61 auf das gesamte Tragelement übertragen. Die schräg in den Ausnehmungen 47 - 47"' angeordneten Führungsklötze 58 der Führungsteile 56 - 56'" transformieren die axiale Bewegung der Stellmutter 61 um in eine entsprechend der Schräge der Ausnehmung 47 - 47'" sich ergebende Höhenverschiebung des Tragelementes gegenüber dem äußeren Rahmen.

Damit es während der Prüfung nicht zu einer unbeabsichtigten Verstellung kommt, kann die Stellmutter 61 mittels einer Klemmschraube 62 festgesetzt werden. Das innere Tragelement und der äußere Rahmen sind über Federn 63 - 63"' miteinander verspannt, damit beide Teile gegeneinander unter Spannung gehalten werden.

Im Stand der Technik ist es bereits bekannt bei Tandemanordnung zweier Prüfköpfe für die Querfehlerprüfung diese axial zueinander verschieben zu können. In einem mit dem Tragelement verbundenen Aufnehmer 64, 64' sind in einer rechteckigen Aussparung 65, 65' - hier nicht dargestellte - Prüfköpfe mit einem Rechteckschwinger einsetzbar.

Der in **Figur 9** links liegende Aufnehmer 64 ist fest am Träger 55 befestigt, während der zweite Aufnehmer 64' axial verschiebbar ist. Die axiale Verschiebung erfolgt mittels zweier Spindeln 66, 66'. Am hier rechts liegenden Ende ist auf jeder Spindel 66, 66' eine Zahnscheibe 67, 67' angeordnet. Umschlungen werden beide Zahnscheiben 67, 67' durch einen endlosen Zahnriemen 68, der über einen Nocken 69 (**Figur 7**) spannbar ist.

An der in **Figur 7** links liegenden Zahnscheibe 67 ist eine Rändelmutter 70 befestigt, um den Zahnriemen 68 bewegen zu können. Durch die Bewegung des Zahnriemens 68 werden beide Spindeln 66, 66' gedreht und damit der Aufnehmer 64' und somit auch der Prüfkopf axial bewegt.

In diesem Ausführungsbeispiel ist im Prüfwagen 35 für die Querfehlerprüfung auch ein dritter Aufnehmer 71 angeordnet. Dieser wird für die Doppelungsprüfung eingesetzt und ist fest mit dem Träger 54 verbunden. Durch die zuvor beschriebene Höhenverstellung des Tragelementes werden alle daran befestigten Aufnehmer 64, 64', 71 gemeinsam mit bewegt, so dass sicher gestellt ist, dass alle drei Prüfköpfe den gleichen Abstand zur Rohroberfläche aufweisen.

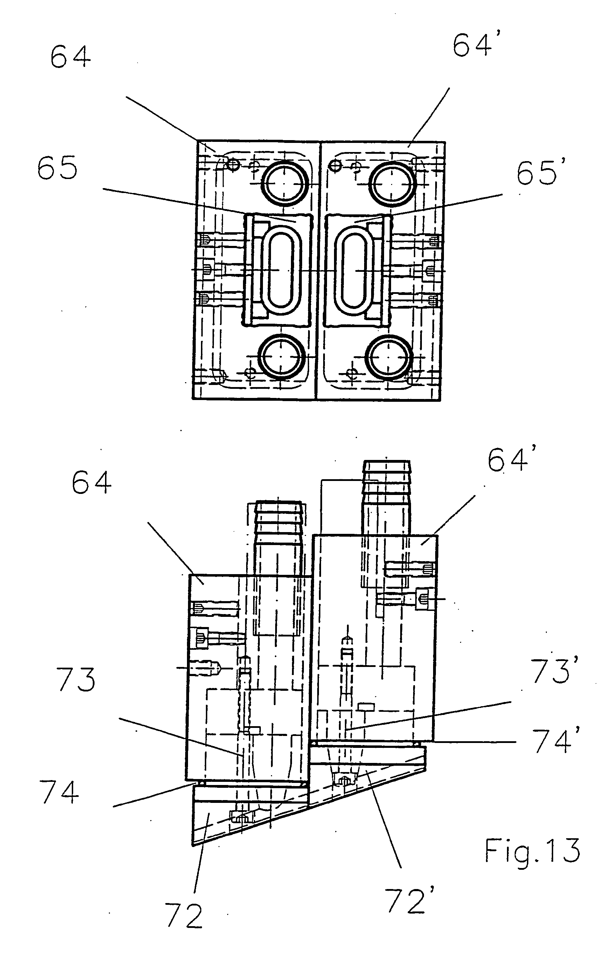

**Figur 13** zeigt in einer Drauf- und in einer Vorderansicht zwei Aufnehmer 64, 64' in Tandemanordnung für die Aufnahme von Querfehlerprüfköpfen. Da diese im Stand der Technik schon ausführlich beschrieben worden ist, erübrigt sich ein näheres Eingehen darauf. Erwähnt werden sollte dagegen, dass erfindungsgemäß die Düsenelemente 72, 72' für die Querfehlerprüfung von unten her mittels Schrauben 73, 73' mit dem jeweiligen Aufnehmer 64, 64' verbunden sind. In diesem Ausführungsbeispiel sind die Düsenelemente 62, 62' ebenfalls aus Teflon hergestellt. Zur Abdichtung zwischen Düsenelement 72, 72' und Aufnehmer 64, 64' kann es erforderlich sein, eine Dichtung 74, 74' anzuordnen.

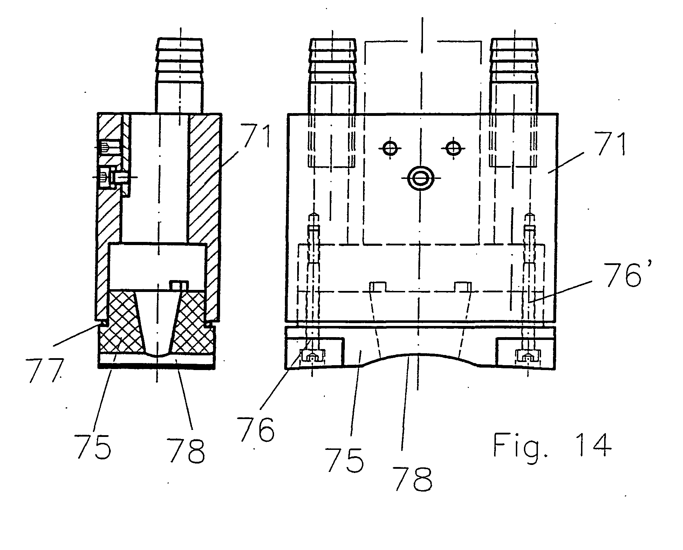

In **Figur 14** ist ein Aufnehmer 71 für die Doppelungsprüfung dargestellt. Das Düsenelement 75 ist ebenfalls mittels Schrauben 76, 76' von unten her mit dem Aufnehmer 71 verbunden. Dazwischen ist optional ein Dichtring 77 angeordnet. Da der Aufnehmer 71 quer über der Schweißnaht 5 sitzt, weist das Düsenelement 75 eine entsprechend geformte Ausnehmung 78 auf.

### Bezugszeichenliste

| **Nr.** | **Bezeichnung** |
|---|---|
| 1 | Prüfwagen |
| 2 | Schwenkachse |
| 3. 3' | Seitenbügel |
| 4 | Oberbügel |
| 5 | Längsschweißnaht |
| 6 | Grundplatte Prüfwagen |
| 7 - 7"' | Kugelrollen |
| 8 | Aufnehmer Längsfehlerprüfkopf |
| 9 | Prüfkopf |
| 10 | Tülle |
| 11 | Platte |
| 12 | Flachstrahldüse |
| 13 | Abweisblech |
| 14, 14' | Seitenplatte |
| 15 | Verbindungsstück |
| 16, 16' | Ausnehmung |
| 17, 17' | nasenartiger Vorsprung |
| 18, 18' | Durchgangsbohrung Seitenplatte |
| 19 - 19"' | Gewindebohrung Aufnehmer |
| 20, 20' | seitliche Gewindebohrung Aufnehmer |
| 21 | Bohrung für Prüfkopf |
| 22 | Bohrung für Tülle |
| 23 | Entlüftungsbohrung |
| 24 | Achse Prüfkopf |
| 25 | Horizontale |
| 26 | Schnittpunkt |
| 27 | Vertikale |
| 28 | Düsenelement Längsfehlerprüfung |
| 29 | Ringkanal |
| 30 | Abflussloch |
| 30 - 31"' | Befestigungsschraube |
| 32 - 32'" | Gewindebohrung Düsenelement |
| 35 | Prüfwagen Querfehlerprüfung |
| 36, 36' | Seitenbügel |
| 37 | Oberbügel |
| 38 - 38"' | Kugelrollen |
| 39 | Rohr, kleiner Durchmesser |
| 40 | Rohr, großer Durchmesser |
| 41, 41' | Seitenteil äußerer Rahmen |
| 42, 42' | Stegblech horizontal |
| 43 - 43"' | Bohrung |
| 44 - 44"' | Klemmelement |
| 45 - 45"' | Stegblech vertikal |
| 46, 46' | Querträger |
| 47, 4' | Ausnehmung |
| 48, 48' | Seitenteil inneres Tragelement |
| 49 - 49"' | schlaufenartiger Steg |
| 50 - 50"' | Bohrung |
| 51 - 51"' | Stehbolzen Tragelement |
| 52 - 52"' | Bohrung |
| 53 - 53"' | Stehbolzen äußerer Rahmen |
| 54, 55 | Träger |
| 56 - 56"' | Führungsteil |
| 57 | kragenartige Scheibe |
| 58 | Führungsklotz |
| 59, 59' | Bohrung |
| 60 | Rändelmutter |
| 61 | Stellmutter |
| 62 | Klemmschraube |
| 63 - 63"' | Feder |
| 64, 64' | Aufnehmer Querfehlerprüfkopf |
| 65, 65' | Aussparung |
| 66, 66' | Spindel |
| 67, 67' | Zahnscheibe |
| 68 | endloser Zahnriemen |
| 69 | Spannnocken |
| 70 | Rändelmutter |
| 71 | Aufnehmer Doppelungsprüfung |
| 72, 72' | Düsenelement Querfehlerprüfung |
| 73, 73' | Befestigungsschraube |
| 74, 74' | Dichtung |
| 75 | Düsenelement Doppelungsprüfung |
| 76, 76' | Befestigungsschraube |
| 77 | Dichtung |
| 78 | Ausnehmung |

## Patentansprüche

1. Vorrichtung zum Ultraschall-Prüfen der Schweißnaht längsnahtgeschweißter Rohre, insbesondere Großrohre, auf Längs- und Querfehler mit zwei schwenkbar aufgehängten, auf der Oberfläche des Rohres rechts und links neben der Schweißnaht verschiebbaren Prüfwagen für die Längsfehler-Prüfung und einem schwenkbar aufgehängten mittig zur Schweißnaht ausgerichteten auf der Oberfläche des Rohres verschiebbaren Prüfwagen für die Querfehlerprüfung, wobei jeder Prüfwagen mit einem Aufnehmer und mindestens einem darin angeordneten einen Schwinger aufweisenden Prüfkopf und mindestens einem Koppelmittel-Anschluss versehen ist, dessen Kanal im Bereich des Schwingers mündet und im Austrittsbereich düsenartig ausgebildet ist, wobei das jeweilige Düsenelement mittels Schrauben mit dem Aufnehmer verbunden ist
**dadurch gekennzeichnet,**
**dass** der Prüfkopf für die Längsfehlerprüfung in verschiedenen fest vorgegebenen Winkellagen, aber im veränderbaren Abstand zum Düsenelement im Aufnehmer (8) anordenbar ist und dass der bzw. die Prüfkopfe für die Querfehlerprüfung mitsamt den Aufnehmern (64, 64') gemeinsam in einem veränderbaren Abstand zur Rohroberfläche in einem die Aufnehmer (64, 64') aufnehmenden Tragelement anordenbar sind.

2. Vorrichtung nach Anspruch 1,
**dadurch gekennzeichnet,**
**dass** an der Grundplatte (6) des Prüfwagens für die Längsfehlerprüfung zwei parallel liegende hochkant stehende Seitenplatten (14, 14') befestigt sind, die innenseitig mit einer unter einem bestimmten Winkel verlaufenden Ausnehmung (16, 16') versehen sind und ein den Prüfkopf (9) umfassender Aufnehmer (8) passend zu den Ausnehmungen (16, 16') mit zwei einander gegenüber liegenden nasenartigen Vorsprüngen (17, 17') versehen und zwischen den Seitenplatten (14, 14') fixierbar ist, wobei die Winkeligkeit der Ausnehmung (16, 16') so gewählt ist, dass die Achse (24) des Prüfkopfes (9) durch einen Schnittpunkt (26), der durch einen Schnitt der durch die Schwenkachse (2) des Prüfwagens verlaufenden Vertikalen (27) mit der durch die Aufsetzpunkte des Prüfwagens sich ergebenden Horizontalen (25) gebildet wird.

3. Vorrichtung nach Anspruch 2
**dadurch gekennzeichnet,**
**dass** die Fixierung des Aufnehmers (8) durch mindestens eine durch jede Seitenplatte (14, 14') steckbare und in den Aufnehmer (8) eindrehbare Schraube erfolgt.

4. Vorrichtung nach Anspruch 2 und 3
**dadurch gekennzeichnet,**
**dass** die zwei Seitenplatten (14, 14') durch ein Verbindungsstück (15) miteinander verbunden sind und einen auswechselbaren Einsatz bilden.

5. Vorrichtung nach Anspruch 1
**dadurch gekennzeichnet,**
**dass** der Prüfwagen für die Querfehlerprüfung für jeden Prüfkopf einen Aufnehmer (64, 64') aufweist, die zusammen in einem Tragelement angeordnet sind, wobei das Tragelement geführt in dem ihn umgebenden Rahmen in der Höhe veränderbar ist.

6. Vorrichtung nach Anspruch 5
**dadurch gekennzeichnet,**
**dass** das Tragelement an jeder Seite mit zwei Führungsteilen (56 - 56"') verbunden ist, die in entsprechenden im Rahmen angeordneten Ausnehmungen (47, 47') verschiebbar sind und dass das stirnseitige Ende des Tragelementes mit einer Rändelmutter (60) zusammenwirkenden Stellmutter (61) verbunden ist.

7. Vorrichtung nach Anspruch 5 und 6
**dadurch gekennzeichnet,**
**dass** das Tragelement gegenüber dem Rahmen mittels Federelement ( 63 - 63"') verspannt ist.

8. Vorrichtung nach Anspruch 1, 5 - 7
**dadurch gekennzeichnet,**
**dass** der Prüfwagen für die Querfehler-Prüfung mit einem fest stehenden Prüfkopf und einem axial dazu verschiebbaren Prüfkopf für die Querfehlerprüfung sowie einem weiteren fest stehenden Prüfkopf für die Doppelungsprüfung versehen ist.

9. Vorrichtung nach einem der Ansprüche 1 - 8
**dadurch gekennzeichnet,**
**dass** die Düsenelemente (72, 72', 75) für die jeweiligen Prüfköpfe aus einem verschleißfesten Kunststoff, vorzugsweise aus Teflon, hergestellt sind.

10. Vorrichtung nach Anspruch 9
**dadurch gekennzeichnet,**
**dass** die Befestigungsschrauben (73. 73', 76, 76') für die Düsenelemente (72. 72'. 75) von unten her durch das Düsenelement durchsteckbar und in die Aufnehmer (64, 64', 71) einschraubbar sind.

11. Vorrichtung nach Anspruch 8
**dadurch gekennzeichnet,**
**dass** für die axiale Verschiebung des zweiten Prüfkopfes des Querfehler-Prüfwagens zwei Spindeln (66, 66') im Tragelement angeordnet sind, die am stirnseitigen Ende je eine Zahnscheibe (67, 67') aufweisen, die von einem endlosen Zahnriemen (68) umschlungen sind.

12. Vorrichtung nach Anspruch 11
**dadurch gekennzeichnet,**
**dass** an einer Zahnscheibe (67) eine Rändelmutter (70) befestigt ist.

## Claims

1. A device for the ultrasonic inspection of the weld seam of longitudinally welded pipes, particularly large pipes, for longitudinal and transverse defects, comprising two pivotally suspended inspection carriages for the longitudinal defect inspection which are displaceable on the surface of the pipe right and left of the weld seam and a pivotally suspended inspection carriage for the transverse defect inspection which is oriented centrally in relation to the weld seam and is displaceable on the surface of the pipe, each inspection carriage being provided with a pick-up and at least one probe, arranged therein and comprising an oscillator, and at least one coupling-means connection, of which the duct opens in the region of the oscillator and is designed so as to be nozzle-like in the exit region, the respective nozzle element being connected to the pick-up by means of screws,
**characterised**
**in that** the probe for the longitudinal defect inspection may be arranged in the pick-up (8) in various fixedly predefined angle positions but at a variable distance from the nozzle element, and in that the probe or probes for the transverse defect inspection may be arranged together with the pick-ups (64, 64') jointly at a variable distance from the pipe surface in a support element accommodating the pick-ups (64, 64').

2. A device according to Claim 1,
**characterised**
**in that** two upright side plates (14, 14') which lie parallel are secured to the base plate (6) of the inspection carriage for the longitudinal defect inspection, which side plates are provided on the inside with a recess (16, 16') extending at a certain angle, and a pick-up (8) comprising the probe (9) is provided with two mutually opposite nose-like projections (17, 17') to match the recesses (16, 16') and is fixable between the side plates (14, 14'), the angularity of the recess (16, 16') being selected such that the axis (24) of the probe (9) [extends]¹ through an intersection (26) which is formed by a section of the vertical (27) extending through the pivot axis (2) of the inspection carriage with the horizontal (25) produced by the contact points of the inspection carriage.
¹ Verb absent in the source document; 'extends' suggested by the translator.

3. A device according to Claim 2,
**characterised**
**in that** the fixing of the pick-up (8) is effected by means of at least one screw which may be inserted through each side plate (14, 14') and screwed into the pick-up (8).

4. A device according to Claim 2 and 3,
**characterised**
**in that** the two side plates (14, 14') are interconnected by means of a connecting piece (15) and form an interchangeable insert.

5. A device according to Claim 1,
**characterised**
**in that** the inspection carriage for the transverse defect inspection has a pick-up (64, 64') for each probe, which are arranged together in a support element, the support element being variable in height, guided in the frame surrounding the said support element.

6. A device according to Claim 5,
**characterised**
**in that** the support element is connected on each side to two guide parts (56 - 56"') which are displaceable in corresponding recesses (47, 47') arranged in the frame and in that the end face of the support element is connected to an adjusting nut (61) cooperating with a knurled nut (60).

7. A device according to Claim 5 and 6,
**characterised**
**in that** the support element is braced with respect to the frame by means of spring element[s]² (63 - 63''').
² Singular noun in the source document; presumably plural is intended.

8. A device according to Claim 1, 5 - 7,
**characterised**
**in that** the inspection carriage for the transverse defect inspection is provided with a fixed probe and a probe displaceable axially thereto for the transverse defect inspection and with a further fixed probe for the duplicating inspection.

9. A device according to one of Claims 1 - 8,
**characterised**
**in that** the nozzle elements (72, 72', 75) for the respective probes are made from a wear-resistant plastics material, preferably Teflon.

10. A device according to Claim 9,
**characterised**
**in that** the fastening screws (73, 73', 76, 76') for the nozzle elements (72, 72', 75) may be inserted through the nozzle element from beneath and may be screwed into the pick-ups (64, 64', 71).

11. A device according to Claim 8,
**characterised**
**in that,** for the axial displacement of the second probe of the transverse defect inspection carriage, two spindles (66, 66') are arranged in the support element, which have on the end face respective toothed discs (67, 67') around which is wrapped an endless toothed belt (68).

12. A device according to Claim 11,
**characterised**
**in that** a knurled nut (70) is secured to one toothed disc (67).

## Revendications

1. Dispositif de contrôle par ultrasons destiné à détecter les défauts longitudinaux et transversaux du cordon de soudure de tubes soudés longitudinalement, notamment de gros tubes, comportant deux chariots de contrôle suspendus de manière pivotante et mobiles sur la surface du tube à droite et à gauche à proximité du cordon de soudure pour le contrôle de défauts longitudinaux et un chariot de contrôle suspendu de manière pivotante, orienté au centre du cordon de soudure et mobile sur la surface du tube pour le contrôle de défauts transversaux, chaque chariot de contrôle étant pourvu d'un logement, d'au moins une tête de contrôle agencée à l'intérieur de celui-ci présentant un transducteur et d'au moins un raccordement pour milieu de couplage, dont le canal débouche dans la zone du transducteur et est réalisé en forme de buse dans la zone de sortie, l'élément de buse étant relié au logement au moyen de vis,
**caractérisé en ce que** la tête de contrôle pour le contrôle de défauts longitudinaux peut être agencée dans le logement (8) dans diverses positions angulaires prédéterminées, mais à distance variable de l'élément de buse, et **en ce que** la ou les têtes de contrôle pour le contrôle de défauts transversaux peuvent être agencées avec les logements (64, 64') à une distance variable de la surface de tube dans un élément porteur recevant les logements (64, 64').

2. Dispositif selon la revendication 1,
**caractérisé en ce que,** sur la plaque de base (6) du chariot de contrôle pour le contrôle de défauts longitudinaux, il est fixé deux plaques latérales (14, 14') parallèles entre elles et posées sur chant, lesquelles sont pourvues sur la face intérieure d'un évidement (16, 16') s'étendant selon un certain angle, et **en ce qu'**un logement (8) comportant la tête de contrôle (9) est pourvu, de façon adaptée aux évidements (16, 16'), de deux saillies (17, 17') en forme de tenons situées à l'opposé l'une de l'autre et peut être fixé entre les plaques latérales (14, 14'), la position angulaire de l'évidement (16, 16') étant choisie de manière que l'axe (24) de la tête de contrôle (9) passe par un point d'intersection (26) qui est formé par une intersection de la verticale (27) passant par l'axe de pivotement (2) du chariot de contrôle avec l'horizontale (25) résultant des points de pose du chariot de contrôle.

3. Dispositif selon la revendication 2,
**caractérisé en ce que** la fixation du logement (8) a lieu par au moins une vis pouvant être enfichée à travers chaque plaque latérale (14, 14') et pouvant être vissée dans le logement (8).

4. Dispositif selon les revendications 2 et 3,
**caractérisé en ce que** les deux plaques latérales (14, 14') sont reliées entre elles par un élément de liaison (15) et forment un insert interchangeable.

5. Dispositif selon la revendication 1,
**caractérisé en ce que** le chariot de contrôle pour le contrôle de défauts transversaux présente pour chaque tête de contrôle un logement (64, 64'), lesquels logements sont agencés ensemble dans un élément porteur, l'élément porteur étant variable en hauteur, guidé dans le cadre l'entourant.

6. Dispositif selon la revendication 5,
**caractérisé en ce que** l'élément porteur est relié de chaque côté à deux éléments de guidage (56-56''') qui sont mobiles dans des évidements (47, 47') correspondants agencés dans le cadre et **en ce que** l'extrémité frontale de l'élément porteur est reliée à un écrou de réglage (61) coopérant avec un écrou moleté (60).

7. Dispositif selon les revendications 5 et 6,
**caractérisé en ce que** l'élément porteur est bridé par rapport au cadre au moyen d'éléments de ressort (63-63''').

8. Dispositif selon les revendications 1, 5 à 7,
**caractérisé en ce que** le chariot de contrôle pour le contrôle de défauts transversaux est pourvu d'une tête de contrôle fixe et d'une tête de contrôle pour le contrôle de défauts transversaux mobile dans le sens axial par rapport à celle-ci ainsi que d'une autre tête de contrôle fixe pour le double contrôle.

9. Dispositif selon l'une des revendications 1 à 8,
**caractérisé en ce que** les éléments de buse (72, 72', 75) pour les différentes têtes de contrôle sont fabriqués dans une matière plastique résistante à l'usure, de préférence en Téflon.

10. Dispositif selon la revendication 9,
**caractérisé en ce que** les vis de fixation (73, 73', 76, 76') pour les éléments de buse (72, 72', 75) peuvent être enfichées par le bas à travers l'élément de buse et visées dans les logements (64, 64', 71).

11. Dispositif selon la revendication 8,
**caractérisé en ce que,** pour le déplacement axial de la seconde tête de contrôle du chariot de contrôle de défauts transversaux, il est agencé deux broches (66, 66') dans l'élément porteur, lesquelles présentent chacune à l'extrémité frontale une roue dentée (67, 67'), sur lesquelles roues dentées s'enroule une courroie dentée sans fin (68).

12. Dispositif selon la revendication 11,
**caractérisé en ce qu'**un écrou moleté (70) est fixé sur une roue dentée (67).
